# EUROPEAN PATENT APPLICATION

(11) **EP 1 247 641 A1**
(43) Date of publication of application: **09.10.2002**
(21) Application number: 02076352.0
(22) Date of filing: 03.04.2002
(51) Int. Cl.: B32B 5/18, E04F 15/02, E04C 2/20

(54) **Floor or wall panel made of synthetic material and method for manufacturing it**

(30) Priority: 03.04.2001 BE 200010219
(71) Applicant: Deceuninck NV, 8830 Hooglede-Gits (BE)
(72) Inventor: Huyghe, Wilfried, 8800 Roeselare (BE)
(74) Representative: Ostyn, Frans

(57) **Abstract**

A panel substantially made of synthetic material (preferably PVC) to form a floor covering or a wall covering, which is made in one piece having a first (1) and a second zone or layer (2) in which the material of the panel has a different density respectively, at least part of the undersurface of the panel being formed by the material having the lowest density.

A similar panel has an undersurface with a relatively great compressibility allowing it to absorb irregularities of the substrate and which, moreover, has a good insulating capacity.

The panel can be manufactured in one piece in a simple and cheap manner, preferably in one material, at least the material with the lowest density being a cellular synthetic material obtained by foaming up during the production process.

## Description

The present invention relates to a panel for forming a floor covering or a wall covering, substantially made of synthetic material, as well as a floor or wall covering consisting of such panels. This invention also relates to a method for manufacturing such panels.

This invention particularly relates to such floor panels provided to be interconnected, lying on a substrate to become an integrated whole to form a hard floor covering.

Wooden parquet floors consisting of solid wooden planks or panels have the disadvantage of being rather expensive and liable to wear and damage. Imitations of such parquet floors using a cheaper and maintenance friendlier method, by means of floor panels not made of solid wood, but, for instance, of compressed fibres to which a binding agent has been added (for instance MDF or HDF) are quite successful. By means of a rather hard top layer of synthetic material or a very thin layer of wood (veneer wood), these panels are given the aspect of a wooden panel and at the same time a wear resistant and maintenance friendly top surface is obtained.

With floor coverings composed of this sort of laminated floor panels, it should be avoided that the floor panels are exposed to too high a degree of humidity. Therefore, the substrate should be covered with vapour tight plastic film. If this film consists of different parts, these parts should be glued together by means of adhesive tape.

There are floor panels in existing which are made of synthetic material, having the advantage that they require less or no protection measures to avoid the effects of moisture. Indeed, contrary to the floor panels made of other materials, they absorb no moisture, so that they may be applied, for instance, in damp spaces, such as bathrooms.

A disadvantage of all these known floor panels, also of these made of synthetic material is however, that first a relatively thick plastic film should be applied to the substrate, before the floor panels can be installed. This is especially necessary to absorb slight irregularities of the substrate. Indeed, the panels have a very limited flexibility, because of which irregularities of the substrate might cause a visible difference in level of one ore more panels of the floor covering. When using the film, the irregularities will form local impressions in the undersurface of the film, so that the top surface of the film will form an even supporting surface for the panels.

On the other hand the film provides a thermal and acoustic insulation and a sort of sound-absorption, because of which inconvenient ticking noises when walking on such a floor covering are damped. Such a film may be made, for instance, of polyethylene foam having a thickness of at least 3 mm.

Installing this film in the correct manner, without inconvenient folds is not a simple matter and rather time-consuming. The additional costs, both for purchasing and applying the film are not to be neglected. Moreover the insulating film will lose its insulating properties gradually as time goes by.

It needs no explanation that it may be necessary to absorb any irregularities of the wall, when installing wall panels.

A first purpose of this invention is to provide a panel to constitute a floor or wall covering which may be realized in a rather simple and cheap manner and which remedies the said inconveniences of the known panels. An additional purpose consists in finding a simple and efficient method to produce these panels.

This purpose is attained by providing a panel to form a floor covering or a wall covering which is made substantially of synthetic material, containing a first and a second layer in which the material of the panel has a different density respectively, while at least a part of the undersurface of the panel is formed by the material having the lowest density and while the panel according to the present invention is made in one piece by means of extrusion.

Such a panel has an undersurface which, at least partially, consists of a material having a density which is low enough to obtain a relatively soft and/or compressible surface in order to compensate any slight irregularities of the substrate, while the other material of the panel may have a density that is sufficient to give the panel the necessary stiffness, so that a hard panel with a limited flexibility will be obtained. Therefore the use of a film to compensate these irregularities is no longer required.

Moreover the material with the lowest density may be produced during the manufacturing process. Therefore an additional production line to produce a separate film is no longer required. Because of this, the production costs are considerably reduced. By using synthetic material also the costs for raw material may be kept low and it is no longer required to avoid a high degree of humidity. Therefore a panel that may be realized in a simple and cheap manner and that moreover may be installed very rapidly and easily. Moreover, the material with the lowest density can also have a thermal and acoustic and sound-absorbing function, so that also the other functions of the known film may be taken over by the material of the panel.
If the undersurface of the panel has a non-even profile (for instance if it is moulded) also relatively considerable irregularities may be compensated.

If in the layer with the highest density cavities or recesses are provided, then this will increase the insulating capacity and at the same time reduce the consumption of raw material.

In a preferred embodiment the panel is made in one piece of a same material. This simplifies the manufacturing process considerably and makes production cheaper. Preferably, the material with the highest density has a density of at least 1.3 g/cm3.

In a preferred embodiment of this panel at least the material with the lowest density is a cellular synthetic material. As a consequence of the closed cellular structure of this synthetic material, this material has an excellent thermal insulating and acoustic insulating capacity, because of which these properties of the known film may even be surpassed. It is also possible, of course, to manufacture the whole panel in the same cellular material. The different zones or layers of the panel then consist of synthetic material with a different density.

Preferably, the material having the lowest density is a cellular synthetic material with a density of maximum 0.5 g/cm3. With a similar value a very good compressibility and a particularly good insulating (thermal and acoustic) and sound-absorbing capacity are obtained.

In a highly preferred embodiment, the material having the lowest density forms the bottom layer of the panel. Because of this, almost the entire surface of the substrate is covered with the material having the lowest density. This will improve the thermal and acoustic insulation and provides a maximum support - absorbing irregularities - for the panels.
In a most preferred embodiment, the panel is substantially made of polyvinyl chloride, more particularly of recycled polyvinyl chloride. When using a recycled product the costs for raw material are reduced to a minimum.

A hard, wear resistant top layer may be provided on the panel. This may be necessary when the panel is provided to be used as a floor panel. This top layer may be provided either by an extrusion process or be glued onto the panel.

Preferably the panel also comprises connecting means to connect adjacent panels in order to form a floor or wall covering.

It is obvious that also a floor covering or a wall covering comprising a number of panels substantially made of synthetic material presenting one or more of the above-mentioned properties lies within the scope of the present invention.

According to the present invention, a method is likewise provided for manufacturing a panel substantially made of synthetic material to form a floor covering or a wall covering, the panel being formed in one piece by extrusion with a first and a second zone or layer in which the material of the panel has a different density respectively, so that at least a part of the undersurface of the panel is formed by the material having the lowest density.

The advantage of this method is that it enables the panel to be produced, in one continuous production process and at a rather low cost price, a covering element rendering an underlying film of synthetic material unnecessary. From the foregoing, the advantages of the covering element itself are rather obvious.
Preferably, the panel is made in one piece of the same raw material. Moreover the material having the lowest density may be formed in a very simple manner by foaming up the synthetic material.

The entire panel can be made also of foamed up synthetic material, layers of different density being obtained by realizing different degrees of foaming up. Preferably, by means of this method, a panel is manufactured having the properties according to the present invention mentioned above.

In the following detailed description of an embodiment of the present invention the afore-mentioned properties and advantages of the invention are further clarified and its additional advantages are pointed out. The intention of this description is only to clarify the general principles of the present invention. This description therefore, may in no way be interpreted as a restriction of the field of application of the present invention or the patent rights stated in the claims.

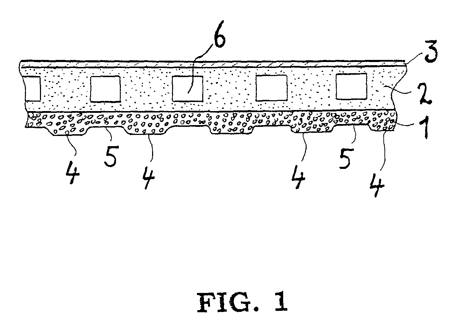

In this description reference is made, by means of reference numbers, to the enclosed figure 1 representing a cross-section of a part of a floor panel according to the present invention.

The floor panel is carried out, for instance, as an elongated body having a reduced height. It has a flat, rectangular top surface and a moulded undersurface and has the same cross-section (transverse to the longitudinal direction). In the figure a central part of this cross-section is represented. The edges of the panel (not represented in the figure) are provided, in the known manner, with connecting means, being a part of the panel. These connecting means are, for instance, a tongue protruding sideways on one side and a corresponding groove on the opposite side of the panel. Also the short edges of the panel may be provided with similar connecting means.

The floor covering may be composed by installing several panels next to one another in a same plane and by connecting them to form an integrated entity. The adjoining panels are then connected by inserting the tongues of one panel into the corresponding grooves of an adjoining panel, whether applying glue or not.

The floor panel is manufactured in a continuous extrusion process in recycled synthetic material, preferably polyvinyl chloride. During this extrusion the synthetic material is foamed up by adding a so-called "foaming agent". Because of this a cellular synthetic material is obtained with a closed cellular structure. During this process care is taken that a bottom layer (1) of the floor panel will obtain a density which is lower than 0.5 g/cm3, and that a layer (2) of the panel situated above will obtain a considerably higher density, preferably more than double the density of the bottom layer. For instance, a density higher than 1.3 g/cm3 is assumed. Because of this the panel will obtain a bottom layer (1) with a good compressibility and an excellent thermal and acoustic insulating capacity.

On its undersurface, the bottom layer (1), shows a number of ribs (4) protruding downwards, extending in the longitudinal direction of the floor panel, parallel to one another and equidistant from one another. This ribs (4) form local thickenings in the cellular synthetic material with the low density and are well compressible. Because of this relatively, considerable irregularities may be absorbed. Between two ribs (4) there is each time a gutter-shaped part (5) in which likewise irregularities may be absorbed. Of course, the moulding of the undersurface may also be of a totally different design.

In the layer (2) with the higher density, cavities are provided, extending in the synthetic material in the longitudinal direction of the panel. In a separate process a film is glued to the top surface of this layer (2), forming a hard, wear resistant top layer (3) and which gives the floor panel a decorative appearance. This top layer (3) may also be formed by extrusion while the panel is produced.

It needs no explanation, that numerous other embodiments of a similar panel are possible within the scope of the present invention. For instance, the panel may also have more than two layers, consisting of materials with a different density respectively.

## Claims

**1.** Panel for composing a floor covering or a wall covering, substantially manufactured in synthetic material and comprising a first (1) and a second zone or layer (2) in which the material of the panel has a different density, while at least part of the undersurface of the panel is formed by the material with the lowest density, **characterized in that** the panel is made in one piece by means of an extrusion process.

**2.** Panel according to claim 1, **characterized in that** its undersurface has an uneven profile.

**3.** Panel according to claim 1 or 2, **characterized in that** in the layer (2) with the highest density cavities (6) or recesses are provided.

**4.** Panel according to claim 1, **characterized in that** it is manufactured in one piece in a same raw material.

**5.** Panel according to anyone of the preceding claims, **characterized in that** the material with the highest density has a density of at least 1.3 g/cm3.

**6.** Panel according to claim 1 or 2, **characterized in that** at least the material with the lowest density is a cellular synthetic material.

**7.** Panel according to claim 3, **characterized in that** the material with the lowest density is a cellular synthetic material having a density of maximum 0.5 g/cm3.

**8.** Panel according to anyone of the preceding claims, **characterized in that** the material with the lowest density forms the bottom layer (1) of the panel.

**9.** Panel according to anyone of the preceding claims, **characterized in that** it is substantially made of polyvinyl chloride, particularly of recycled polyvinyl chloride.

**10.** Panel according to anyone of the preceding claims, **characterized in that** its top surface is provided with a hard wear-resistant top layer (3).

**11.** Panel according to claim 10, **characterized in that** the wear-resistant top layer (3) is applied to the panel by means of an extrusion process or is glued onto the panel.

**12.** Panel according to anyone of the preceding claims, **characterized in that** it comprises connecting means to connect it to adjacent panels to form a floor or wall covering.

**13.** Floor or wall covering comprising a number of panels substantially made of synthetic material, **characterized in that** the panels are in accordance with one or more of the preceding claims.

**14.** Method for manufacturing a panel substantially made of synthetic material to form a floor covering or a wall covering, **characterized in that** the panel is formed in one piece by means of extrusion with a first (1) and a second zone or layer (2) in which the material of the panel has a different density respectively, so that at least a part of the undersurface of the panel is constituted by the material having the lowest density.

**15.** Method according to claim 14, **characterized in that** the panel is made in one piece of the same material.

**16.** Method according to claim 14 or 15, **characterized in that** at least the material having the lowest density is made by foaming up the synthetic material.

**16.** Method according to anyone of the claims 14 up to and including 16, **characterized in that** a panel is manufactured in accordance with anyone of the claims 1 up to and including 12.
